# FASCICULE DE BREVET EUROPEEN

(11) **EP 3 884 646 B1**
(45) Date de publication et mention de la délivrance du brevet: **31.08.2022**
(21) Numéro de dépôt: 19805699.6
(22) Date de dépôt: 22.11.2019
(51) Int. Cl.: H04L 67/12, H04B 7/185, H04B 10/112, H04W 4/46, H04W 4/02, H04W 64/00, H04W 84/06

(54) **PROCÉDÉ D'ÉCHANGE DE DONNÉES ENTRE DES DRONES D'UN ESSAIM DE DRONES**
VERFAHREN FÜR DATENKOMMUNIKATION ZWISCHEN DROHNEN IN EINEM DROHNENSCHWARM
METHOD FOR DATA EXCHANGE BETWEEN THE DRONES OF A DRONE SWARM

(30) Priorité: 23.11.2018 FR 1871758
(43) Date de publication de la demande: 29.09.2021
(73) Titulaire: THALES, 92400 Courbevoie (FR)
(72) Inventeur: PERRUCHOT, Ludovic, 78995 ELANCOURT CEDEX (FR); ANTIER, Philippe, 78995 ELANCOURT CEDEX (FR); LIGERET, Vincent, 78995 ELANCOURT CEDEX (FR); ACHART, Jérôme, 78995 ELANCOURT CEDEX (FR)
(74) Mandataire: Lavoix
(86) Numéro de dépôt international: PCT/EP2019/082284
(87) Numéro de publication internationale: WO 2020/104677

(56) Documents cités:
- US-A1- 2016 026 179
- US-A1- 2016 114 487
- US-B1- 9 104 201

## Description

La présente invention concerne un procédé d'échange de données entre des drones d'un essaim de drones. La présente invention porte aussi sur un essaim de drones propre à mettre en œuvre un tel procédé d'échange de données.

Un essaim de drones, aussi appelé réseau de drones, désigne un ensemble de drones évoluant à proximité les uns des autres. Afin de communiquer entre eux, les drones d'un tel essaim sont classiquement pourvus de dispositifs de communication radiofréquence. En outre, de tels drones sont généralement équipés de dispositifs de localisation GPS (de l'anglais *Global Positioning System*) leur permettant de se localiser et de transmettre leur position aux autres drones de l'essaim.

Le document US9104201 décrit un système pour détecter lorsqu'un ou plusieurs véhicules aériens sans pilote (drones) aéroportés sont proches les uns des autres, et pour prendre les mesures nécessaires pour maintenir une distance minimale ainsi qu'une distance maximale entre les drones dans un environnement dynamique par navigation automatique.

Néanmoins, les échanges de données par communication radiofréquence sont susceptibles d'être brouillés, et ne sont donc pas suffisamment robustes pour des applications critiques. De même, la localisation via un dispositif de localisation GPS est facilement brouillable.

Il existe donc un besoin pour un procédé d'échange de données entre des drones d'un essaim de drones permettant l'identification et la localisation des drones de l'essaim qui soit robuste et qui ne nécessite pas l'ajout d'un dispositif de localisation sur chaque drone.

A cet effet, l'invention a pour objet un procédé d'échange de données entre des drones d'un essaim de drones, l'essaim de drones comprenant au moins quatre drones, chaque drone étant muni d'un identifiant propre au drone, chaque drone comprenant au moins un émetteur, au moins un récepteur et un calculateur, chaque récepteur comprenant une matrice de pixels configurée de sorte que chaque signal soit reçu sur un nombre de pixels de la matrice de pixels strictement inférieur au nombre total de pixels de la matrice de pixels, le procédé comprenant à chaque instant :
- l'émission, par l'émetteur de chaque drone, d'un signal comprenant des données à émettre, les données à émettre comprenant l'identifiant du drone, ainsi que la direction et l'identifiant de chaque signal reçu à l'instant précédent par le récepteur du drone,
- la réception, par le récepteur d'au moins un drone, dit drone récepteur, du signal émis par au moins un autre drone de l'essaim,
- la détermination, par le calculateur de chaque drone récepteur, de la direction de chaque signal reçu en fonction de la position du ou des pixels de la matrice de pixels recevant le signal, et
- le cas échéant, la détermination, par le calculateur de chaque drone récepteur, pour chaque signal reçu, de la position relative du drone correspondant à l'identifiant du signal reçu en fonction de la direction déterminée pour le signal reçu et d'au moins deux directions obtenues à l'instant précédent par le récepteur du drone récepteur et correspondant au même identifiant que le signal reçu.

Selon d'autres aspects avantageux de l'invention, le procédé d'échange de données comprend une ou plusieurs des caractéristiques suivantes, prises isolément ou suivant toutes les combinaisons techniquement possibles :
- le récepteur de chaque drone comprend un capteur à détection d'événements, la matrice de pixels étant comprise dans le capteur à détection d'événements ;
- au moins l'un des drones, dit drone de référence, est associé à une position absolue, les données à émettre par l'émetteur du drone de référence comprenant la position absolue du drone de référence, le procédé comprenant, en outre, la détermination, par chaque drone récepteur recevant le signal émis par le drone de référence, de la position absolue de chaque drone pour lequel une position relative a été déterminée par le drone récepteur en fonction de la position absolue du drone de référence et des positions relatives déterminées par le drone récepteur ;
- le ou au moins l'un des drones de référence est immobile au sol ;
- le ou au moins l'un des drones de référence est porteur d'un système de localisation absolue ;
- au moins l'un des drones de l'essaim comprend un capteur configuré pour détecter la présence d'objets dans le champ du capteur, le procédé comprenant, à chaque instant, pour le drone :
   - la détection des objets dans le champ du capteur, et
   - pour chaque objet détecté, la classification de l'objet comme étant étranger à l'essaim de drones lorsqu'aucun signal n'est reçu en provenance de l'objet ou lorsque le signal reçu pour l'objet ne comprend pas l'identifiant d'un drone de l'essaim ;
- chaque émetteur est un émetteur grand champ ;
- chaque émetteur est configuré pour émettre des signaux sur un angle solide au moins égal à 2π stéradians, de préférence chaque drone comprenant au moins deux émetteurs diamétralement opposés de sorte à émettre des signaux sur un angle solide de 4π stéradians ;
- l'émetteur de chaque drone est un émetteur laser, de préférence dans la gamme de longueur d'ondes comprises entre 0,7 micromètre et 1.6 micromètre ;
- chaque récepteur est un récepteur grand champ.

L'invention concerne, en outre, un essaim de drones comprenant au moins quatre drones, chaque drone étant muni d'un identifiant propre au drone, chaque drone comprenant au moins un émetteur, au moins un récepteur et un calculateur, chaque récepteur comprenant une matrice de pixels configurée de sorte que chaque signal soit reçu sur un nombre de pixels de la matrice de pixels strictement inférieur au nombre total de pixels de la matrice de pixels, l'essaim de drones étant propre à mettre en oeuvre un procédé d'échange de données tel que décrit précédemment.

D'autres caractéristiques et avantages de l'invention apparaîtront à la lecture de la description qui suit de modes de réalisation de l'invention, donnée à titre d'exemple uniquement, et en référence aux dessins qui sont :
- [Fig 1] une représentation schématique d'un essaim de drones,
- [Fig 2] une représentation schématique de l'essaim de drones de la figure 1 en situation d'échange de données et sur laquelle est, en outre, représentée la matrice de pixels correspondant au récepteur de chaque drone, et
- [Fig 3], un organigramme d'un exemple de mise en oeuvre d'un procédé d'échange de données selon l'invention.

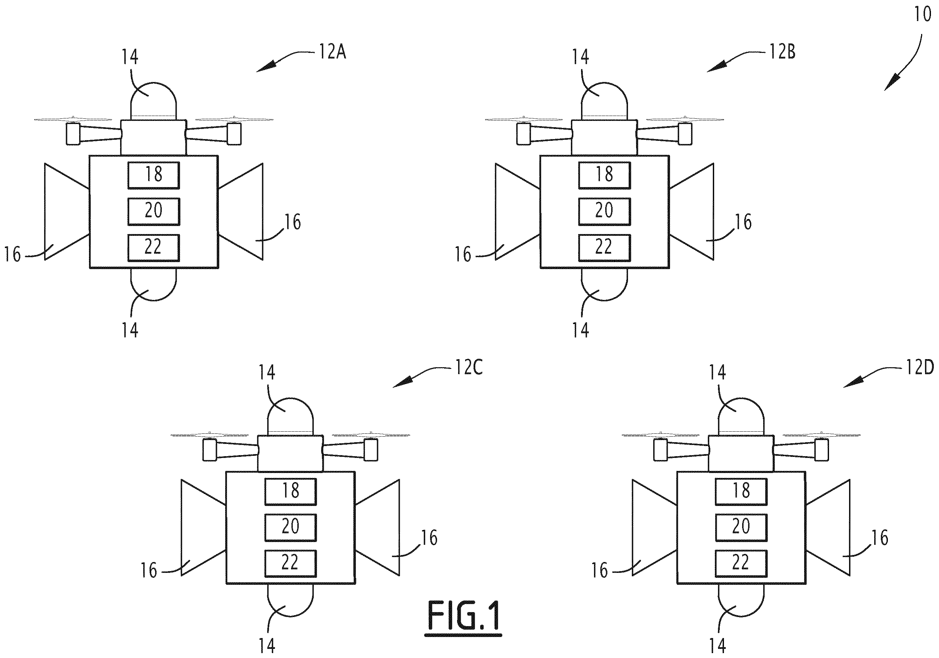

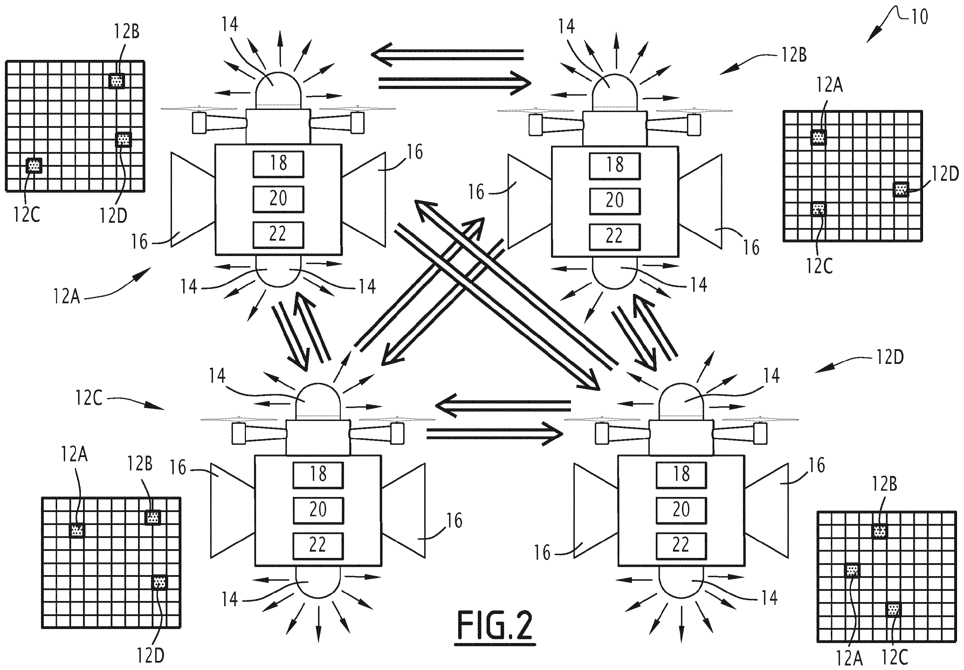

Un essaim 10 de drones 12 comprenant une pluralité de drones 12 est illustré par les figures 1 et 2. Un drone est un aéronef sans pilote et sans humain à bord qui est généralement télécommandé.

En particulier, l'essaim 10 de drones 12 illustré par les figures 1 et 2 comprend quatre drones 12A, 12B, 12C, 12D. En variante, l'essaim 10 de drones 12 comprend un nombre de drones 12 strictement supérieur à quatre.

Chaque drone 12 est muni d'un identifiant propre au drone 12. A titre d'exemple, un identifiant est un numéro spécifique au drone 12 et qui diffère d'un drone 12 de l'essaim 10 à un autre.

Avantageusement, au moins l'un des drones 12, dit drone de référence, est associé à une position absolue. Dans ce cas, la position absolue du drone de référence est, par exemple, mémorisée dans une mémoire du drone de référence. Par exemple, le drone de référence est immobile sur une surface fixe, telle que le sol.

En variante, le drone de référence est porteur d'un système de localisation absolue.

Par exemple, le drone de référence est muni d'un système de localisation, tel qu'un système de type chercheur d'étoile, qui permet de localiser la position du drone de référence à chaque instant.

Chaque drone 12 comprend au moins un émetteur 14, au moins un récepteur 16, un calculateur 18 et une mémoire 20. Optionnellement, au moins l'un des drones 12 de l'essaim 10 comprend un capteur 22.

Chaque émetteur 14 est, de préférence, un émetteur grand champ. Un émetteur grand champ est défini comme étant un émetteur configuré pour émettre un signal sur un angle solide strictement supérieur à 10° par 10°. Ainsi, un émetteur grand champ permet d'émettre un signal dans une pluralité de directions autour du drone 12.

De préférence, chaque émetteur 14 est configuré pour émettre des signaux sur un angle solide au moins égal à 2π stéradians (hémisphère). Dans l'exemple illustré par les figures 1 et 2, chaque drone 12 comprend au moins deux émetteurs 14 diamétralement opposés de sorte à émettre des signaux sur un angle solide de 4π stéradians (sphère) autour du drone 12.

L'émetteur 14 de chaque drone 12 est configuré pour émettre un signal optique. Ainsi, l'émetteur 14 de chaque drone 12 n'émet aucun signal radiofréquence.

L'émetteur 14 de chaque drone 12 est, avantageusement, un émetteur laser. La gamme de longueur d'onde de l'émetteur laser est, par exemple, comprise entre 0,7 micromètre (µm) et 1.6 micromètre.

Le récepteur 16 de chaque drone 12 est un récepteur grand champ. Un récepteur grand champ est défini comme étant un récepteur configuré pour recevoir un signal sur un angle solide strictement supérieur à 10° par 10°. Ainsi, un récepteur grand champ permet de recevoir des signaux en provenance d'une pluralité de directions autour du drone 12.

Par exemple, chaque récepteur grand champ est configuré pour recevoir des signaux sur un angle solide au moins égal à 90° par 120°.

De préférence, chaque drone 12 comprend au moins quatre récepteurs 14 orthogonaux à un même plan et décalés de 90°. Ainsi, cela permet de couvrir des signaux en provenance des quatre points cardinaux autour du drone 12.

Chaque récepteur 16 comprend une matrice de pixels 23 configurée de sorte que chaque signal soit reçu sur un nombre de pixels de la matrice de pixels 23 strictement inférieur au nombre total de pixels de la matrice de pixels 23. Typiquement, chaque pixel de la matrice est associé à une direction. Ainsi, cela permet la détermination de la direction de chaque signal reçu par la matrice de pixels 23.

De préférence, chaque récepteur 16 comprend un capteur à détection d'événements, la matrice de pixels 23 étant comprise dans le capteur à détection d'événements. Un capteur à détection d'événements est un capteur comprenant une matrice de pixels dont les pixels sont autonomes et propres à réagir indépendamment les uns des autres avec un temps de réponse généralement de l'ordre de la microseconde. Un capteur à détection d'événement est propre à capter et à transmettre uniquement les changements d'événements et non toute la scène, comme le font les capteurs d'image traditionnels. Ainsi, par rapport à un capteur d'image traditionnel, un capteur à détection d'événements présente un temps de latence, un volume de données à traiter et une consommation de courant réduits. En outre, un capteur à détection d'événements a une grande bande passante, typiquement supérieure à 1 mégabit par seconde

Le calculateur 18 est, par exemple, un processeur.

Le capteur 22 est configuré pour détecter la présence d'objets dans le champ du capteur 22. De tels objets sont, avantageusement, des objets électroniques. Par exemple, de tels objets sont les autres drones 12 de l'essaim 10, des drones n'appartenant pas à l'essaim ou encore des aéronefs.

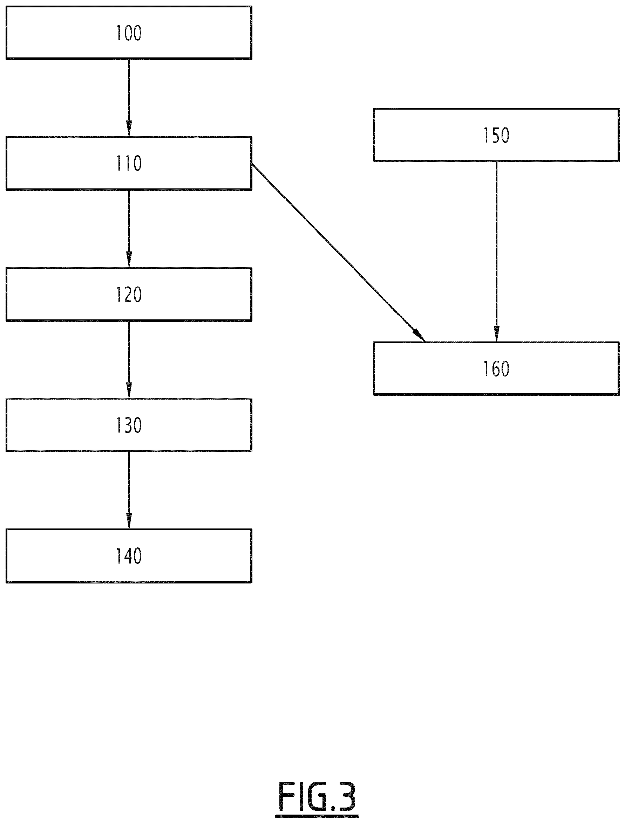

Le fonctionnement de l'essaim 10 de drones 12 de la figure 1 est maintenant décrit en référence aux figures 2 et 3 qui illustrent un exemple de mise en œuvre d'un procédé d'échange de données selon l'invention. Les étapes d'un tel procédé sont mises en œuvre à chaque instant, c'est-à-dire en temps réel.

Le procédé d'échange de données comprend une étape 100 d'émission par l'émetteur 14 de chaque drone 12 d'un signal comprenant des données à émettre. Les données à émettre comprennent l'identifiant du drone 12, ainsi que la direction et l'identifiant de chaque signal reçu à l'instant précédent par le récepteur 16 du drone 12. De tels signaux reçus à l'instant précédent sont des signaux en provenance d'autres drones 12 de l'essaim 10. Avantageusement, le signal comprenant les données à émettre comprend, en outre, des données utiles à la communication entre drones, telle que des instructions d'un drone à un autre.

Lorsqu'au moins l'un des drones 12, dit drone de référence est associé à une position absolue, les données à émettre par l'émetteur 14 du drone de référence comprennent, également, la position absolue du drone de référence.

La direction et l'identifiant de chaque signal reçu par chaque drone 12 à l'instant précédent sont, par exemple, mémorisés dans la mémoire 20 du drone 12. La mémoire 20 de chaque drone 12 est, comme cela sera décrit dans ce qui suit, mise à jour à chaque instant.

Ainsi, lors de l'initialisation d'un drone 12, les données à émettre comprennent uniquement l'identifiant du drone 12 puisque le drone 12 n'a pas reçu de signal à l'instant précédent. Lors de l'initialisation d'un drone de référence, les données à émettre comprennent uniquement l'identifiant du drone de référence et la position absolue du drone de référence puisque le drone de référence n'a pas reçu de signal à l'instant précédent.

Dans l'exemple illustré par la figure 2, chacun des quatre drones 12A, 12B, 12C et 12D de l'essaim 10 émet un signal à destination des autres drones 12 de l'essaim 10.

Le procédé d'échange de données comprend une étape 110 de réception, par le récepteur 16 d'au moins un drone 12, dit drone récepteur, du signal émis par au moins un autre drone 12 de l'essaim 10.

Dans l'exemple illustré par la figure 2, chacun des quatre drones 12A à 12D de l'essaim 10 reçoit un signal en provenance de chacun des trois autres drones 12 de l'essaim 10. En effet, dans l'exemple illustré par la figure 2, aucun élément, tel qu'un bâtiment ou de la végétation, ne vient masquer les signaux émis par les différents drones 12 de l'essaim 10. Ainsi, dans cet exemple, chaque drone 12 de l'essaim 10 est un drone récepteur.

Par contre si, par exemple, le drone 12D était masqué par un bâtiment, les autres drones 12A à 12C ne recevraient pas de signaux en provenance du drone 12D et le drone 12D ne recevrait pas de signaux en provenance des drones 12A à 12C.

Le procédé d'échange de données comprend une étape 120 de détermination, par le calculateur 18 de chaque drone récepteur, de la direction de chaque signal reçu en fonction de la position du ou des pixels de la matrice de pixels 23 recevant le signal. En effet, chaque pixel de la matrice de pixels 23 étant associé à une direction (dans l'espace réel), la direction de chaque signal reçu est déterminé en fonction de la position, sur la matrice de pixels 23, du ou des pixels recevant le signal.

De manière générale, un signal reçu en haut à gauche, respectivement à droite, de la matrice de pixels sera considéré comme étant en provenance d'un drone à gauche, respectivement à droite, du drone récepteur et à une hauteur supérieure ou égale à celle du drone récepteur. Un signal reçu en bas à gauche, respectivement à droite, de la matrice de pixels sera considéré comme étant en provenance d'un drone à gauche, respectivement à droite, du drone récepteur et à une hauteur inférieure ou égale à celle du drone récepteur. Par exemple, pour le drone 12A illustré en figure 2, le signal en provenance du drone 12B se situe en haut à droite de la matrice de pixels 23 du récepteur 16 du drone 12A. Le signal en provenance du drone 12C se situe en bas à gauche de la matrice de pixels 23 du récepteur 16 du drone 12A et le signal reçu en provenance du drone 12D se situe en bas à droite de la matrice de pixels 23 du récepteur 16 du drone 12A.

La direction est déterminée, par exemple, en termes d'angle de site et d'angle de gisement. L'angle de gisement est l'angle formé entre l'axe longitudinal du drone récepteur et la direction du signal reçu. L'angle de site, aussi appelé angle d'élévation, est l'angle formé entre le plan horizontal du drone récepteur et la direction du signal reçu.

Le procédé d'échange de données comprend une étape 130 de détermination, par le calculateur 18 de chaque drone récepteur, pour chaque signal reçu, de la position relative du drone 12 correspondant à l'identifiant du signal reçu.

La position relative du drone 12 correspondant est déterminée en fonction de la direction déterminée pour le signal reçu et d'au moins deux directions obtenues à l'instant précédent par le récepteur 16 du drone 12 et correspondant au même identifiant que le signal reçu. Ainsi, une position relative est obtenue à l'étape de détermination 130 seulement lorsque la mémoire 20 du drone récepteur comprend la direction de deux signaux ayant le même identifiant que le signal reçu.

Plus précisément, la position relative des drones 12 correspondants à chaque signal reçu est déterminée par triangulation. La triangulation est une méthode permettant de déterminer la position d'un point en mesurant les angles entre le point et d'autres points de référence dont la position est connue, et ceci plutôt que de mesurer directement la distance entre les points. Un tel point peut être considéré comme étant le troisième sommet d'un triangle dont on connaît deux angles et la longueur d'un côté.

A l'issue de l'étape de détermination 130, la mémoire 20 de chaque drone 12 est, également, mise à jour en remplaçant les directions et identifiants mémorisés dans la mémoire 20 par la direction déterminée pour chaque signal reçu associé à l'identifiant du drone 12 compris dans les données de chaque signal reçu.

Lorsqu'au moins l'un des drones 12, dit drone de référence, est associé à une position absolue, le procédé d'échange comprend une étape de détermination 140, par le drone de référence, et par chaque drone récepteur recevant le signal émis par le drone de référence, de la position absolue de chaque drone 12 pour lequel une position relative a été déterminée par le drone récepteur.

La position absolue du drone 12 correspondant à l'identifiant de chaque signal reçu est déterminée en fonction de la position absolue du drone de référence et des positions relatives déterminées lors de l'étape de détermination 130.

Les matrices fournissant le site et le gisement des drones vus, on en déduit la position relative de chaque drone en 3 dimensions et en absolu si l'un des drones est référencé en absolu.

Avantageusement, pour chaque drone 12 de l'essaim 10 comprenant un capteur 22 configuré pour détecter la présence d'objets dans le champ du capteur 22, le procédé d'échange de données comprend, en outre, une étape 150 de détection des objets dans le champ du capteur 22. L'étape 150 de détection a, par exemple, lieu en même temps que l'étape de réception 110.

Pour chaque objet détecté, le procédé d'échange de données comprend une étape 160 de classification de l'objet comme étant étranger à l'essaim 10 de drones 12 lorsqu'aucun signal n'est reçu en provenance de l'objet ou lorsque le signal reçu pour l'objet ne comprend pas l'identifiant d'un drone 12 de l'essaim 10. Sinon l'objet est considéré comme étant un drone 12 appartenant à l'essaim 10 de drones 12.

Avantageusement, lorsqu'un objet est classé comme étant étranger à l'essaim 10 de drones 12, une alarme est envoyée à un utilisateur pilotant ou surveillant le drone 12 à distance.

Ainsi, le procédé d'échange de données permet l'identification et la localisation, par chaque drone d'un essaim, des autres drones de l'essaim situés dans l'environnement proche du drone. Plus généralement, le procédé d'échange de données permet la communication entre des drones d'un essaim.

Le procédé permet, également, de s'affranchir de l'utilisation d'ondes radiofréquences et est donc plus robuste au brouillage. Il présente aussi l'avantage de s'affranchir d'un dispositif de localisation GPS.

## Revendications

1. Procédé d'échange de données entre des drones (12) d'un essaim (10) de drones (12), l'essaim (10) de drones (12) comprenant au moins quatre drones (12), chaque drone (12) étant muni d'un identifiant propre au drone (12), chaque drone (12) comprenant au moins un émetteur (14), au moins un récepteur (16) et un calculateur (18), chaque récepteur (16) comprenant une matrice de pixels (23) configurée de sorte que chaque signal soit reçu sur un nombre de pixels de la matrice de pixels (23) strictement inférieur au nombre total de pixels de la matrice de pixels (23), le procédé comprenant à chaque instant :
- l'émission, par l'émetteur (14) de chaque drone (12), d'un signal comprenant des données à émettre, les données à émettre comprenant l'identifiant du drone (12), ainsi que la direction et l'identifiant de chaque signal reçu à l'instant précédent par le récepteur (16) du drone (12),
- la réception, par le récepteur (16) d'au moins un drone (12), dit drone récepteur, du signal émis par au moins un autre drone (12) de l'essaim (10),
- la détermination, par le calculateur (18) de chaque drone récepteur, de la direction de chaque signal reçu en fonction de la position du ou des pixels de la matrice de pixels (23) recevant le signal, et
- le cas échéant, la détermination, par le calculateur (18) de chaque drone récepteur, pour chaque signal reçu, de la position relative du drone (12) correspondant à l'identifiant du signal reçu en fonction de la direction déterminée pour le signal reçu et d'au moins deux directions obtenues à l'instant précédent par le récepteur (16) du drone récepteur et correspondant au même identifiant que le signal reçu.

2. Procédé selon la revendication 1, dans lequel le récepteur (16) de chaque drone (12) comprend un capteur à détection d'événements, la matrice de pixels (23) étant comprise dans le capteur à détection d'événements.

3. Procédé selon la revendication 1 ou 2, dans lequel au moins l'un des drones (12), dit drone de référence, est associé à une position absolue, les données à émettre par l'émetteur (14) du drone de référence comprenant la position absolue du drone de référence, le procédé comprenant, en outre, la détermination, par chaque drone récepteur recevant le signal émis par le drone de référence, de la position absolue de chaque drone (12) pour lequel une position relative a été déterminée par le drone récepteur en fonction de la position absolue du drone de référence et des positions relatives déterminées par le drone récepteur.

4. Procédé selon la revendication 3, dans lequel le ou au moins l'un des drones de référence est immobile au sol.

5. Procédé selon la revendication 3 ou 4, dans lequel le ou au moins l'un des drones de référence est porteur d'un système de localisation absolue.

6. Procédé selon l'une quelconque des revendications 1 à 5, dans lequel au moins l'un des drones (12) de l'essaim (10) comprend un capteur (22) configuré pour détecter la présence d'objets dans le champ du capteur (22), le procédé comprenant, à chaque instant, pour le drone (12) :
la détection des objets dans le champ du capteur (22), et
pour chaque objet détecté, la classification de l'objet comme étant étranger à l'essaim (10) de drones (12) lorsqu'aucun signal n'est reçu en provenance de l'objet ou lorsque le signal reçu pour l'objet ne comprend pas l'identifiant d'un drone (12) de l'essaim (10).

7. Procédé selon l'une quelconque des revendications 1 à 6, dans lequel chaque émetteur (14) est un émetteur grand champ.

8. Procédé selon la revendication 7, dans lequel chaque émetteur (14) est configuré pour émettre des signaux sur un angle solide au moins égal à 2π stéradians, de préférence chaque drone (12) comprenant au moins deux émetteurs (14) diamétralement opposés de sorte à émettre des signaux sur un angle solide de 4π stéradians.

9. Procédé selon l'une quelconque des revendications 1 à 8, dans lequel l'émetteur (14) de chaque drone (12) est un émetteur laser, de préférence dans la gamme de longueur d'ondes comprises entre 0,7 micromètre et 1.6 micromètre.

10. Procédé selon l'une quelconque des revendications 1 à 9, dans lequel chaque récepteur (16) est un récepteur grand champ.

11. Essaim de drones (12) comprenant au moins quatre drones (12), chaque drone (12) étant muni d'un identifiant propre au drone (12), chaque drone (12) comprenant au moins un émetteur (14), au moins un récepteur (16) et un calculateur (18), chaque récepteur (16) comprenant une matrice de pixels (23) configurée de sorte que chaque signal soit reçu sur un nombre de pixels de la matrice de pixels (23) strictement inférieur au nombre total de pixels de la matrice de pixels (23), l'essaim (10) de drones (12) étant propre à mettre en œuvre un procédé d'échange de données selon l'une quelconque des revendications 1 à 10.

## Patentansprüche

1. Datenaustauschverfahren zwischen Drohnen (12) eines Schwarms (10) von Drohnen (12), der Schwarm (10) von Drohnen (12) umfassend mindestens vier Drohnen (12), wobei jede Drohne (12) mit einer für die Drohne (12) spezifischen Kennung versehen ist, jede Drohne (12) umfassend mindestens einen Sender (14), mindestens einen Empfänger (16) und einen Rechner (18), jeder Empfänger (16) umfassend eine Pixelmatrix (23), die konfiguriert ist, sodass jedes Signal auf einer Anzahl von Pixeln der Pixelmatrix (23) empfangen wird, die strikt kleiner ist als die Gesamtzahl von Pixeln der Pixelmatrix (23), das Verfahren umfassend zu jedem Zeitpunkt:
- Senden, durch den Sender (14) jeder Drohne (12), eines Signals, umfassend zu sendende Daten, die zu sendenden Daten umfassend die Kennung der Drohne (12) sowie die Richtung und die Kennung von jedem Signal, das zu dem vorherigen Zeitpunkt durch den Empfänger (16) der Drohne (12) empfangen wurde,
- Empfangen, durch den Empfänger (16) mindestens einer Drohne (12), die als Empfängerdrohne bezeichnet wird, des Signals, das von mindestens einer anderen Drohne (12) des Schwarms (10) gesendet wird,
- Bestimmen, durch den Rechner (18) jeder empfangenden Drohne, der Richtung von jedem empfangenen Signal abhängig von der Position des Pixels oder der Pixel der Pixelmatrix (23), die das Signal empfängt, und
- optional Bestimmen, durch den Rechner (18) von jeder empfangenden Drohne, für jedes empfangene Signal, der relativen Position der Drohne (12), die der Kennung des empfangenen Signals entspricht, abhängig von der für das empfangene Signal bestimmten Richtung und von mindestens zwei Richtungen, die in dem vorherigen Zeitpunkt durch den Empfänger (16) der empfangenden Drohne erlangt wurden und der gleichen Kennung wie das empfangene Signal entsprechen.

2. Verfahren nach Anspruch 1, wobei der Empfänger (16) von jeder Drohne (12) einen Ereigniserfassungssensor umfasst, wobei die Pixelmatrix (23) in dem Ereigniserfassungssensor enthalten ist.

3. Verfahren nach Anspruch 1 oder 2, wobei mit mindestens eine der Drohnen (12), die als Referenzdrohne bezeichnet wird, eine absolute Position assoziiert ist, wobei die von dem Sender (14) der Referenzdrohne zu sendenden Daten die absolute Position der Referenzdrohne umfassen, das Verfahren ferner umfassend ein Bestimmen, durch jede Empfängerdrohne, die das von der Referenzdrohne gesendete Signal empfängt, der absoluten Position jeder Drohne (12), für die eine relative Position durch die Empfängerdrohne bestimmt wird, abhängig von der absoluten Position der Referenzdrohne und den durch die Empfängerdrohne bestimmten relativen Positionen.

4. Verfahren nach Anspruch 3, wobei die oder mindestens eine der Referenzdrohnen unbeweglich am Boden ist.

5. Verfahren nach Anspruch 3 oder 4, wobei die oder mindestens eine der Referenzdrohnen ein absolutes Ortungssystem trägt.

6. Verfahren nach einem der Ansprüche 1 bis 5, wobei mindestens eine der Drohnen (12) des Schwarms (10) einen Sensor (22) umfasst, der konfiguriert ist, um die Anwesenheit von Objekten im Feld des Sensors (22) zu erkennen, das Verfahren umfassend zu jedem Zeitpunkt für die Drohne (12):
Erfassen von Objekten in dem Feld des Sensors (22), und
für jedes erfasste Objekt, Klassifizieren des Objekts als fremd für den Schwarm (10) von Drohnen (12), wenn kein Signal von dem Objekt empfangen wird oder wenn das für das Objekt empfangene Signal nicht die Kennung einer Drohne (12) des Schwarms (10) umfasst.

7. Verfahren nach einem der Ansprüche 1 bis 6, wobei jeder Sender (14) ein Großfeldsender ist.

8. Verfahren nach Anspruch 7, wobei jeder Sender (14) konfiguriert ist, um Signale über einen Raumwinkel von mindestens 2π Steradiant zu senden, vorzugsweise jede Drohne (12) umfassend mindestens zwei diametral gegenüberliegende Sender (14), sodass sie Signale über einen Raumwinkel von 4π Steradiant sendet.

9. Verfahren nach einem der Ansprüche 1 bis 8, wobei der Sender (14) von jeder Drohne (12) ein Lasersender ist, vorzugsweise in einem Wellenlängenbereich zwischen 0,7 Mikrometern und 1,6 Mikrometern.

10. Verfahren nach einem der Ansprüche 1 bis 9, wobei jeder Empfänger (16) ein Großfeldempfänger ist.

11. Drohnenschwarm (12), umfassend mindestens vier Drohnen (12), wobei jede Drohne (12) mit einer für die Drohne (12) spezifischen Kennung versehen ist, jede Drohne (12) umfassend mindestens einen Sender (14), mindestens einen Empfänger (16) und einen Rechner (18), jeder Empfänger (16) umfassend eine Pixelmatrix (23), die konfiguriert ist, sodass jedes Signal auf einer Anzahl von Pixeln der Pixelmatrix (23) empfangen wird, die strikt kleiner ist als die Gesamtanzahl von Pixeln der Pixelmatrix (23), wobei der Schwarm (10) von Drohnen (12) geeignet ist, Datenaustauschverfahren nach einem der Ansprüche 1 bis 10 durchzuführen.

## Claims

1. A method for exchanging data between drones (12) of a swarm (10) of drones (12), the swarm (10) of drones (12) comprising at least four drones (12), each drone (12) being provided with an identifier specific to the drone (12), each drone (12) comprising at least one transmitter (14), at least one receiver (16) and a computer (18), each receiver (16) comprising a pixel matrix (23) configured so that each signal is received on a number of pixels of the pixel matrix (23) that is strictly less than the total number of pixels of the pixel matrix (23), the method comprising, at each moment:
- emitting, by the transmitter (14) of each drone (12), a signal comprising data to be emitted, the data to be emitted comprising the identifier of the drone (12), as well as the direction and the identifier of each signal received at the preceding moment by the receiver (16) of the drone (12),
- receiving, by the receiver (16) of at least one drone (12), called the receiver drone, the signal emitted by at least one other drone (12) of the swarm (10),
- determining, by the computer (18) of each receiver drone, the direction of each signal received as a function of the position of the pixel or pixels of the pixel matrix (23) receiving the signal, and
- if necessary, determining, by the computer (18) of each receiver drone, for each received signal, the relative position of the drone (12) corresponding to the identifier of the received signal as a function of the direction determined for the received signal and of at least two directions obtained at the preceding moment by the receiver (16) of the receiver drone and corresponding to the same identifier as the received signal.

2. The method according to claim 1, wherein the receiver (16) of each drone (12) comprises an event detection sensor, the pixel matrix (23) being comprised in the event detection sensor.

3. A method according to claim 1 or 2, wherein at least one of the drones (12), referred to as a reference drone, is associated with an absolute position, the data to be emitted by the transmitter (14) of the reference drone comprising the absolute position of the reference drone, the method further comprising the determination, by each receiver drone receiving the signal emitted by the reference drone, of the absolute position of each drone (12) for which a relative position has been determined by the receiver drone as a function of the absolute position of the reference drone and the relative positions determined by the receiver drone .

4. The method according to claim 3, wherein the or at least one of the reference drones is stationary on the ground.

5. The method according to claim 3 or 4, wherein the or at least one of the reference drones carries an absolute location system.

6. The method according to any one of claims 1 to 5, wherein at least one of the drones (12) of the swarm (10) comprises a sensor (22) configured to detect the presence of objects in the field of the sensor (22), the method comprising, at each moment, for the drone (12):
detecting objects in the field of the sensor (22), and
for each detected object, classifying the object as foreign to the swarm (10) of drones (12) when no signal is received from the object or when the signal received for the object does not comprise the identifier of a drone (12) in the swarm (10).

7. The method according to any one of claims 1 to 6, wherein each transmitter (14) is a wide field transmitter.

8. The method according to claim 7, wherein each transmitter (14) is configured to transmit signals over a solid angle of at least 2π steradians, preferably each drone (12) comprising at least two diametrically opposed transmitters (14) so as to transmit signals over a solid angle of 4π steradians.

9. The method according to any one of claims 1 to 8, wherein the transmitter (14) of each drone (12) is a laser transmitter, preferably in the wavelength range of between 0.7 micrometers and 1.6 micrometers.

10. The method according to any one of claims 1 to 9, wherein each receiver (16) is a wide field receiver.

11. A drone swarm (12) comprising at least four drones (12), each drone (12) being provided with an identifier unique to the drone (12), each drone (12) comprising at least one transmitter (14), at least one receiver (16) and a computer (18), each receiver (16) comprising a pixel matrix (23) configured so that each signal is received on a number of pixels of the pixel matrix (23) that is strictly less than the total number of pixels of the pixel matrix (23), the swarm (10) of drones (12) being suitable for implementing a data exchange method according to any one of claims 1 to 10.
